# EUROPÄISCHE PATENTSCHRIFT

(11) **EP 0 785 382 B1**
(45) Veröffentlichungstag und Bekanntmachung des Hinweises auf die Patenterteilung: **17.07.2002**
(21) Anmeldenummer: 97100313.2
(22) Anmeldetag: 10.01.1997
(51) Int. Cl.: F16H 61/38, F16H 61/02

(54) **Verfahren zur Regelung stufenloser Getriebe von Kraftfahrzeugen**
Method of controlling a continuously variable transmission of motor vehicles
Procédé de régulation d'une transmission à variation continue de véhicules

(30) Priorität: 20.01.1996 DE 19602033
(43) Veröffentlichungstag der Anmeldung: 23.07.1997
(73) Patentinhaber: Conti Temic microelectronic GmbH, 90411 Nürnberg (DE); AUDI AG, 85045 Ingolstadt (DE)
(72) Erfinder: Genzel, Michael, 90574 Rosstal (DE); Möller, Rodolfo, 90461 Nürnberg (DE); Tonn, Armin, 91154 Roth (DE); Kuster, Willem, 85049 Ingolstadt (DE); Leicht, Andreas, 85080 Gaimersheim (DE)
(74) Vertreter: Maute, Hans-Jürgen, Dipl.-Ing.

(56) Entgegenhaltungen:
- EP-A- 0 697 548
- FR-A- 2 699 978
- GB-A- 2 220 038
- US-A- 4 852 429

## Beschreibung

Die Erfindung betrifft ein Verfahren gemäß dem Oberbegriff des Patentanspruchs 1 wie es aus der US 4,852,429 bekannt ist.

Die Antriebseinheit von Kraftfahrzeugen (der Motor und das dazugehörige Getriebe) wird in zunehmendem Maße Regelungs- und Steuerungsmechanismen unterworfen, um das Zusammenspiel des Motors mit dem Getriebe zu optimieren; beispielsweise muß zur Senkung des Kraftstoffverbrauchs von Kraftfahrzeugen neben einer verbesserten Ansteuerung des Motors auch die Getriebeübersetzung angepaßt werden. Hierfür bieten sich Automatikgetriebe an, wobei in zunehmendem Maße stufenlose Getriebe (CVT-Getriebe: "Continuous Variable Transmission") eingesetzt werden, bei denen das Getriebe so lange verstellt wird, bis sich das gewünschte Getriebeübersetzungsverhältnis eingestellt hat. Durch ein zwischen den Scheiben zweier Scheibensätze angeordnetes Transmissionselement (Kette, Band, Riemen etc.) kann das erforderliche Getriebeübersetzungsverhältnis kontinuierlich (stufenlos) verändert werden: durch Anlegen des gleichen Werts der Anpreßkraft auf die beiden Scheibensätze - dies entspricht der sog. Vorspannkraft -, wird das Kraftniveau für das Transmissionselement eingestellt; durch Vorgabe unterschiedlicher Werte der Anpreßkraft auf die beiden Scheibensätze wird eine zusätzliche Kraftkomponente zum Transport des Transmissionselements erzeugt, wobei durch Variation der Anpreßkraft und damit der Transportkraft das Getriebeübersetzungsverhältnis in beliebigen Schritten stufenlos variiert werden kann.
Aus der eingangs erwähnten gattungsgemäßen US 4,852,429 ist ein Verfahren zur Regelung stufenlos verstellbarer Getriebe bekannt, bei dem einem ersten Regelkreis mit der gemessenen Getriebeeingangsdrehzahl als Regelgröße ein zweiter Regelkreis mit der zeitlichen Ableitung der Getriebeeingangsdrehzahl als Regelgröße unterlagert ist. Bei dem als Drehzahlregler ausgebildeten Regelkreis wird die Getriebeeingangsdrehzahl bzw. Antriebsdrehzahl geregelt. Hierzu weist der Regelkreis am Reglereingang ein Summationsglied auf, dem als erster Summand der Sollwert der Getriebeeingangsdrehzahl als Führungsgröße und als zweiter Summand der Istwert der Getriebeeingangsdrehzahl als Regelgröße zugeführt wird; die durch Differenzbildung der beiden Größen Sollwert der Getriebeeingangsdrehzahl und Istwert der Getriebeeingangsdrehzahl am Ausgang des Summationsglieds erhaltene Regelabweichung wird einem Regelglied aus Proportionalregler, Begrenzer und Tiefpaß zugeführt, an dessen Ausgang (dem Reglerausgang) die zeitliche Ableitung der Getriebeeingangsdrehzahl ansteht. Zur Verbesserung des Regelverhaltens ist dem Drehzahlregier ein zweiter Regelkreis in der Art eines Beschleunigungsreglers unterlagert, bei dem die vom Reglerausgang des Drehzahlreglers als Sollwert bereitgestellte zeitliche Ableitung der Getriebeeingangsdrehzahl die Führungsgröße bildet; d.h. zusätzlich zur Drehzahlregelung erfolgt eine Drehzahländerungsregelung.
Bei einer Regelung der gemessenen Getriebeeingangsdrehzahl spielen alle Einflüsse der zwischen der zur Messung der Getriebeeingangsdrehzahl vorgesehenen Sensorik und dem angetriebenen Rad des Kraftfahrzeugs liegenden mechanischen Elemente (Differential, Wellen, Zahnräder, Scheibensatz) in das Regelverhalten mit hinein; insbesondere wird oftmals aufgrund einer Änderung der gemessenen Getriebeeingangsdrehzahl die Regelung aktiviert, wenn dies eigentlich gar nicht erwünscht ist - die Folge hiervon ist ein unruhiges Regelverhalten.

Der Erfindung liegt die Aufgabe zugrunde, ein Verfahren zur Regelung stufenlos verstellbarer Getriebe von Kraftfahrzeugen, gemäß dem Oberbegriff des Patentanspruchs 1, anzugeben, bei dem auf einfache Weise eine Überwachung bzw. Kontrolle des Regelverhaltens ermöglicht wird.
Diese Aufgabe wird erfindungsgemäß durch die Merkmale im Kennzeichen des Patentanspruchs 1 gelöst.
Vorteilhafte Weiterbildungen und Ausgestaltungen der Erfindung ergeben sich aus den weiteren Patentansprüchen.

Beim vorgestellten Verfahren zur Regelung stufenlos verstellbarer Getriebe von Kraftfahrzeugen wird bei einem zweistufigen Regler mit einem ersten Regelkreis als Drehzahlregler und einem dem ersten Regelkreis unterlagerten zweiten Regelkreis als Drehzahländerungsregler die sich als Produkt aus der zur Fahrzeuggeschwindigkeit proportionalen Getriebeausgangsdrehzahl bzw. Abtriebsdrehzahl (Störgröße) und dem Getriebeübersetzungsverhältnis (Stellgröße) ergebende Getriebeeingangsdrehzahl bzw. Antriebsdrehzahl geregelt.

Das Regelkreisglied des Drehzahlreglers wird mittels eines nicht-linearen Filterglieds realisiert, wobei durch Definition unterschiedlicher Filterfunktionen für das Filterglied und des Verlaufs der jeweiligen Filterfunktion ein Regelverhalten mit einem variablen (nicht-konstanten) Proportionalanteil und einer variablen Begrenzung ermöglicht wird. Demzufolge kann bei einer erforderlichen oder gewünschten Variation des als Führungsgröße bzw. Eingangsgröße des Drehzahlreglers fungierenden Sollwerts der Getriebeeingangsdrehzahl der Regelverlauf und damit die zeitliche Ableitung (die Verstellgeschwindigkeit) des Sollwerts der Getriebeeingangsdrehzahl als Eingangsgröße des Drehzahländerungsreglers variabel vorgegeben werden, indem der Einfluß der Regelung auf die zeitliche Ableitung des Sollwerts der Getriebeeingangsdrehzahl (d.h. auf die Sollwertvorgabe für den unterlagerten Drehzahländerungsregler) in Abhängigkeit der Betriebsbedingungen des Kraftfahrzeugs variiert wird. Der jeweilige Verlauf der Filterfunktion (Bereichsgrenzen, Grenzwerte, Maximalwerte, Minimalwerte, Steigungen etc.), d.h. die funktionale Abhängigkeit der Ausgangsgröße zeitliche Änderung (Verstellgeschwindigkeit) des Sollwerts der Getriebeeingangsdrehzahl von der Eingangsgröße Sollwert der Getriebeeingangsdrehzahl und damit der jeweilige Regelverlauf kann - beispielsweise anhand einer (zweidimensionalen) Kennlinie oder eines (dreidimensionalen) Kennfelds - nach Maßgabe unterschiedlicher Betriebsbedingungen des Kraftfahrzeugs vorgegeben bzw. variiert werden; beispielsweise in Abhängigkeit der jeweiligen Fahrsituation (Überholvorgänge, "Kick-down" des Gaspedals, Bremsvorgänge), und/oder der aktuellen Fahrzeuggeschwindigkeit, und/oder des momentanen Getriebeübersetzungsverhältnisses, und/oder der maximal möglichen mechanischen Änderungsgeschwindigkeit für das Getriebeübersetzungsverhältnis, und/oder der Umweltbedingungen (beispielsweise Schlupferkennung, Zugbetrieb/Schubbetrieb, Anhängerfahrt, Bergfahrt), und/oder des Fahrertyps (Motorleistungsbedarf des jeweiligen Fahrers) und/oder der Größe der Regelabweichung (Drehzahldifferenz aus Istwert und Sollwert der Getriebeeingangsdrehzahl) etc. In Abhängigkeit dieser Kriterien werden unterschiedliche Filterfunktionen mit charakteristischem Funktionsverlauf (beispielsweise mit einem bestimmten Kennlinien- bzw. Kennfeldverlauf) definiert; anhand mindestens eines der genannten Kriterien für die aktuellen Betriebsbedingungen des Kraftfahrzeugs wird unter Verwendung der definierten Filterfunktionen die adäquate Filterfunktion als aktuelle Filterfunktion generiert; anhand der aktuellen Filterfunktion mit ihrem charakteristischen Funktionsverlauf (Kennlinien- bzw. Kennfeldverlauf) und ihren Funktionswerten ergeben sich die Filterwerte als Ausgangsgröße des Drehzahlreglers, mit denen der Drehzahländerungsregler als Führungsgröße beaufschlagt wird. Bei einer nicht-eindeutigen Charakterisierung der momentanen Betriebsbedingungen bzw. Zuordnungsmöglichkeit der momentanen Betriebsbedingungen zu einer bestimmten Filterfunktion können zwei oder mehr Filterfunktionen zur Bestimmung der Filterwerte (der Funktionswerte der aktuellen Filterfunktion) herangezogen werden; beispielsweise kann eine Interpolation zwischen den Funktionswerten zweier oder mehrerer Filterfunktionen vorgenommen, und der derart gemittelte Funktionswert als Filterwert dem Drehzahländerungsregler zugeführt werden. Bei der Definition der Filterfunktionen (d.h. der Vorgabe der Funktionswerte der Filterfunktionen) müssen dabei die Systemgrenzen der Regelkreise, empirische Kundenwünsche und die Fahreigenschaften des Kraftfahrzeugs (Grenzwerte, Fahrbarkeit etc.) berücksichtigt werden.
Infolge der durch das vorgestellte Verfahren ermöglichten variablen Vorgabe des Sollwerts der zeitlichen Ableitung der Getriebeeingangsdrehzahl (und damit der Verstellgeschwindigkeit für das Getriebeübersetzungsverhältnis) kann das Regelverhalten der beiden Regelkreise an unterschiedliche Gegebenheiten bzw. Erfordernisse angepaßt und hierdurch der Fahrkomfort, das Fahrverhalten und demzufolge auch die Fahrsicherheit verbessert werden. Infolge der Regelung der berechneten Getriebeeingangsdrehzahl wird die Regelung nur bei wirklichem Bedarf aktiviert, so daß ein ruhiges Regelverhalten erreicht wird.

Anhand der Zeichnung mit den Figuren 1 bis 3 wird das Verfahren zur Regelung stufenloser Getriebe eines Kraftfahrzeugs erläutert, wobei in der Figur 1 ein Blockschaltbild des Reglers mit den beiden Regelkreisen Drehzahlregler und Drehzahländerungsregler dargestellt ist und die Figuren 2 und 3 jeweils den Verlauf zweier Filterfunktionen des Filterglieds für zwei unterschiedliche die Betriebsbedingungen des Kraftfahrzeugs charakterisierende Kriterien zeigen.

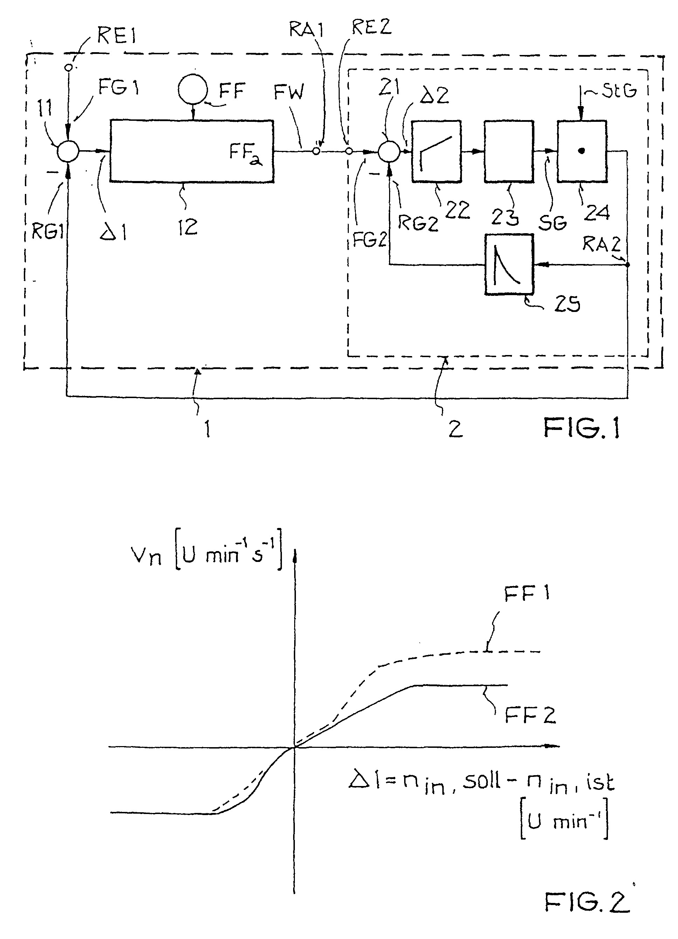

Gemäß der Figur 1 besteht der zweistufige Regler aus dem ersten Regelkreis 1 (Drehzahlregler) zur Regelung der Getriebeeingangsdrehzahl n_{IN} als Produkt nₒᵤᵣ · ÜV der Getriebeausgangsdrehzahl nₒᵤᵣ (diese ist proportional zur Geschwindigkeit des Kraftfahrzeugs) und des Getriebeübersetzungsverhältnisses ÜV und aus dem dem ersten Regelkreis 1 unterlagerten zweiten Regelkreis 2 (Drehzahländerungsregler) zur Regelung der zeitlichen Ableitung (d/dt) der Getriebeeingangsdrehzahl n_{IN}.

Der erste Regelkreis 1 weist am Eingang RE1 ein Summationsglied 11 auf, dem als erster Summand der Sollwert n_{IN,SOLL} der Getriebeeingangsdrehzahl n_{IN} als Führungsgröße FG1 und als zweiter Summand der Istwert n_{IN,IST} der Getriebeeingangsdrehzahl n_{IN} als Regelgröße RG1 zugeführt wird. Die durch Differenzbildung der beiden Größen n_{IN,SOLL} und n_{IN,IST} am Ausgang des Summationsglieds 11 gebildete Regelabweichung Δ1 (Δ1 = n_{IN,SOLL} - n_{IN,IST}) wird dem als Filterglied ausgebildeten Regelkreisglied 12 zugeführt, an dessen Ausgang RA1 der Sollwert d/dt(n_{IN,SOLL}) der zeitlichen Ableitung d/dt(n_{IN}) der Getriebeeingangsdrehzahl n_{IN} ansteht.

Der zweite Regelkreis 2 weist am Reglereingang RE2 ein mit dem Ausgang RA1 des Regelkreisglieds 12 verbundenes Summationsglied 21 auf, dem als erster Summand der Sollwert d/dt(n_{IN,SOLL})der zeitlichen Ableitung d/dt(n_{IN}) der Getriebeeingangsdrehzahl n_{IN} als Führungsgröße FG2 und als zweiter Summand der Istwert d/dt(n_{IN,IST}) der zeitlichen Ableitung d/dt(n_{IN}) der Getriebeeingangsdrehzahl n_{IN} als Regelgröße RG2 zugeführt wird. Die durch Differenzbildung der beiden Größen d/dt(n_{IN,SOLL}) und d/dt(n_{IN,IST}) am Ausgang des Summationsglieds 21 gebildete Regelabweichung Δ2 (Δ2 = d/dt(n_{IN,SOLL}) - d/dt(n_{IN,IST})) wird dem als Pl-Regler ausgebildeten Regelglied 22 zugeführt, das über das Stellglied 23 bzw. die Regelstrecke als Stellgröße SG das Getriebeübersetzungsverhältnis ÜV vorgibt. Dem am Ausgang des Stellglieds 23 angeschlossenen Multiplikationsglied 24 wird als erster Produktfaktor die Stellgröße SG Getriebeübersetzungsverhältnis ÜV und als zweiter Produktfaktor die als Störgröße StG fungierende Getriebeausgangsdrehzahl n_{OUT} zugeführt; durch Multiplikation der beiden Größen Getriebeübersetzungsverhältnis ÜV und Getriebeausgangsdrehzahl n_{OUT} wird der Istwert n_{IN,IST} der Getriebeeingangsdrehzahl n_{IN} gebildet. Der Istwert n_{IN,IST} der Getriebeeingangsdrehzahl n_{IN} am Ausgang RA2 des zweiten Regelkreises 2 wird als Regelgröße RG1 dem Summationsglied 11 am Eingang RE1 des ersten Regelkreises 1 und einem Differenzierglied 25 zur Bildung der zeitlichen Ableitung zugeführt, die dann als Regelgröße RG2 dem Summationsglied 21 am Reglereingang RE2 des zweiten Regelkreises 2 zugeführt wird.
In Abhängigkeit der Betriebsbedingungen des Kraftfahrzeugs werden unterschiedliche Filterfunktionen FF definiert und dem als Filterglied ausgebildeten Regelkreisglied 12 bereitgestellt. Mit dem Verlauf der Filterfunktion FF wird ein fester Zusammenhang zwischen der Regelabweichung Δ1 = n_{IN,SOLL} - n_{IN,IST} und dem Sollwert d/dt(n_{IN,SOLL}) der zeitlichen Ableitung d/dt(n_{IN}) der Getriebeeingangsdrehzahl n_{IN} (Ausgangsgröße Filterglied) vorgegeben. Bei sprungförmigen Änderungen des Sollwerts n_{IN,SOLL} der Getriebeeingangsdrehzahl n_{IN} wird in Abhängigkeit der Regelabweichung Δ1 immer ein definierter Sollwert der zeitlichen Ableitung d/dt(n_{IN}) der Getriebeeingangsdrehzahl n_{IN} gefordert, d. h. mit dem Verlauf der Filterfunktion FF wird kontrolliert, wie (mit welcher zeitlichen Änderung) die Regelabweichung Δ1 = n_{IN,SOLL} - n_{IN,IST} zu Null geregelt wird. Die Auslegung der Filterfunktion FF erfolgt z. B. nach Komfort, maximaler Fahrzeugbeschleunigung oder optimalem Verbrauch. In Abhängigkeit der aktuellen Betriebsbedingungen des Kraftfahrzeugs wird mittels der dem Filterglied bereitgestellten Filterfunktionen FF die jeweils adäquate aktuelle Filterfunktion FFa generiert (entweder unter Verwendung der Funktionswerte nur einer der Filterfunktionen FF oder unter Verwendung der Funktionswerte mindestens zweier Filterfunktionen FF); als Ausgangsgröße des Filterglieds werden die Funktionswerte der aktuellen Filterfunktion FFa als Filterwerte FW dem Summationsglied 21 am Reglereingang RE2 des zweiten Regelkreises 2 als Führungsgröße FG2 zugeführt. Durch geeignete Wahl des Verlaufs der Filterfunktionen FF des Filterglieds bzw. durch geeignete Generierung der jeweiligen aktuellen Filterfunktion FFa bzw. der Filterwerte FW wird das Regelverhalten des zweiten Regelkreises 2 (Drehzahländerungsregler) dahingehend beeinflußt, daß bei Änderungen des Sollwerts n_{IN,SOLL} der Getriebe-eingangsdrehzahl n_{IN} das Getriebeübersetzungsverhältnis ÜV als Stellgröße SG entsprechend dem aktuellen Wunsch (beispielsweise verbrauchsoptimiert) geändert wird.

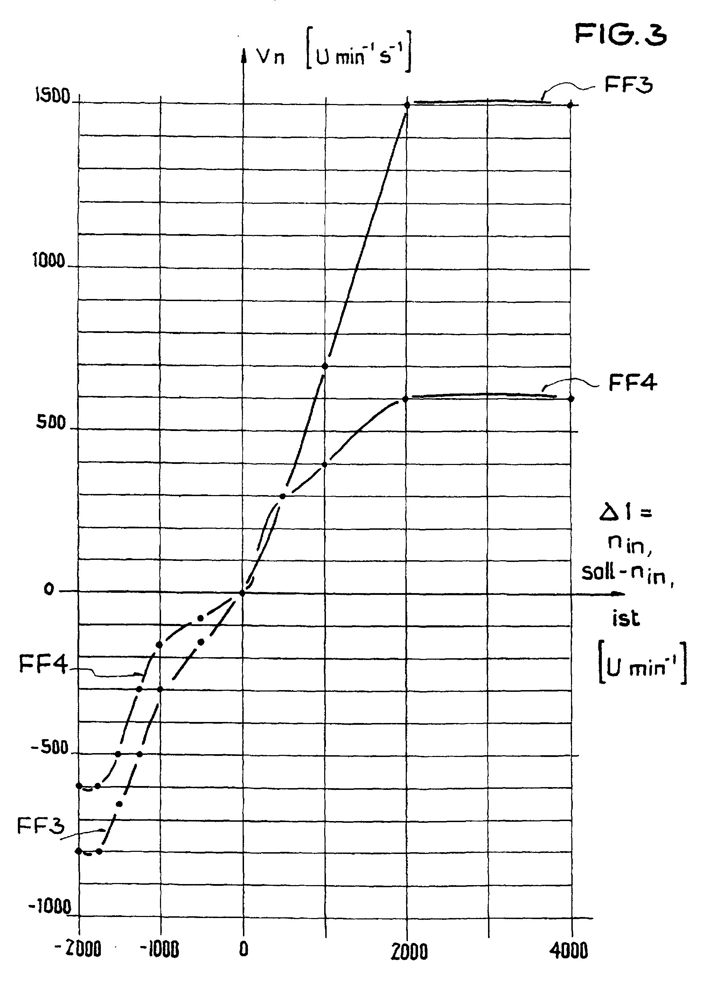

In der Figur 2 und der Figur 3 ist der beispielhafte Verlauf verschiedener Filterfunktionen FF mit der Eingangsgröße Sollwert n_{IN,SOLL} der Getriebeeingangsdrehzahl n_{IN} und der Ausgangsgröße Verstellgeschwindigkeit vₙ des Sollwerts n_{IN,SOLL} der Getriebeeingangsdrehzahl n_{IN} in Abhängigkeit zweier für die Betriebsbedingungen des Kraftfahrzeugs charakteristischer Kriterien dargestellt.
Gemäß der Figur 2 ist der qualitative Verlauf für vom Fahrertyp abhängiger Filterfunktionen am Beispiel zweier Filterfunktionen FF1 und FF2 dargestellt, wobei der Verlauf der Filterfunktion FF1 für einen "sportlichen" Fahrer mit einem hohen Leistungsbedarf und der Verlauf der Filterfunktion FF2 für einen "ökonomischen" Fahrer mit einem geringen Leistungsbedarf charakteristisch ist. Fordert ein Fahrer durch Betätigen des Fahrpedals eine höhere Leistung und damit einen größeren Sollwert n_{IN,SOLL} der Getriebeeingangsdrehzahl n_{IN} (n_{IN,SOLL} > n_{IN,IST}), erreicht der "sportliche" Fahrer mit Hilfe der Filterfunktion FF1 und der sich daraus ergebenden Verstellgeschwindigkeit vₙ des Sollwerts n_{IN,SOLL} der Getriebeeingangsdrehzahl n_{IN} schneller ein kürzeres Getriebeübersetzungsverhältnis ÜV als der "ökonomische" Fahrer mit Hilfe der Filterfunktion FF2. Bei negativen Änderungen des Sollwerts n_{IN,SOLL} der Getriebeeingangsdrehzahl n_{IN} (n_{IN,SOLL} < n_{IN,IST}) ist es umgekehrt, d. h. der "ökonomische" Fahrer erreicht mit Hilfe der Filterfunktion FF2 und der sich daraus ergebenden Verstellgeschwindigkeit vₙ schneller ein längeres Getriebeübersetzungsverhältnis ÜV als der "sportliche" Fahrer mit Hilfe der Filterfunktion FF1. Zur Bestimmung der dem Drehzahländerungsregler 2 zugeführten fahrertypabhängigen Filterwerte FW kann nun jedem Fahrer des Kraftfahrzeugs entweder eine dieser Filterfunktionen FF1, FF2 als aktuelle Filterfunktion FFa zugeordnet werden oder je nach Fahrverhalten des Fahrers die aktuelle Filterfunktion FFa durch geeignete Interpolation zwischen diesen beiden Filterfunktionen FF1, FF2 gewonnen werden.

Gemäß der Figur 3 ist der quantitative Verlauf für vom Fahrzustand des Kraftfahrzeugs (Schubbetrieb/Zugbetrieb) abhängiger Filterfunktionen am Beispiel zweier Filterfunktionen FF3 und FF4 dargestellt, wobei der Verlauf der Filterfunktion FF3 für den Schubbetrieb (das Kraftfahrzeug wird nicht vom Motor angetrieben) und der Verlauf der Filterfunktion FF4 für den Zugbetrieb (das Kraftfahrzeug wird vom Motor angetrieben) charakteristisch ist; ein Schubbetrieb wird hierbei bei einem Fahrpedalwinkel oder Drosselklappenwinkel von weniger als 1° angenommen, ein Zugbetrieb dagegen bei einem Fahrpedalwinkel oder Drosselklappenwinkel von mehr als 1°. Bei positiven Änderungen des Sollwerts n_{IN,SOLL} der Getriebeeingangsdrehzahl n_{IN} (n_{IN,SOLL} > n_{IN,IST}) erreicht man im Schubbetrieb mit Hilfe der Filterfunktion FF3 und der sich hieraus ergebenden Verstellgeschwindigkeit vₙ schneller ein kürzeres Getriebeübersetzungsverhältnis ÜV wie im Zugbetrieb mit Hilfe der Filterfunktion FF4; damit kann beispielsweise das Bremsmoment des Kraftfahrzeugs im Schubbetrieb (dies ergibt sich aus dem Motorbremsmoment und dem Getriebeübersetzungsverhältnis ÜV) unabhängig von der im Zugbetrieb (ohne Motorbremswirkung) gewünschten Verstellgeschwindigkeit vₙ kontrolliert werden. Die gleiche Unterscheidungsmöglichkeit gibt es bei negativen Änderungen des Sollwerts n_{IN,SOLL} der Getriebeeingangsdrehzahl n_{IN}, d. h. beim Verstellen in Richtung längeres Getriebeübersetzungsverhältnis ÜV (n_{IN,SOLL} < n_{IN,IST}). Beim Schubbetrieb (Filterfunktion FF3) wird das längere Getriebeübersetzungsverhältnis ÜV schneller als im Zugbetrieb (Filterfunktion FF4) erreicht; hierdurch kann das Bremsmoment des Kraftfahrzeugs im Schubbetrieb so klein wie möglich gehalten werden.

Für andere Betriebsbedingungen des Kraftfahrzeugs bzw. andere Randbedingungen (beispielsweise Kick-down, Leerlauf, betätigte Bremse) können Verlauf der Filterfunktion FF (insbesondere deren Steigung und Grenzwerte) entsprechend angepaßt bzw. variiert werden. Weiterhin kann die bei zwei oder mehr für die Betriebsbedingungen des Kraftfahrzeugs herangezogenen Kriterien am besten geeignete (adäquate) aktuelle Filterfunktion FFa entweder durch Vorgabe einer bereits definierten Filterfunktion FF oder durch geeignete Interpolation zwischen mindestens zwei bereits definierten Filterfunktionen FF ermittelt werden. Die Filterfunktion FF kann auch durch Interpolation aus einem Kennfeld gewonnen werden - beispielsweise aus einem Kennfeld mit der Regelabweichung Δ1 = n_{IN,SOLL} - n_{IN,IST} und einer Kennziffer für den Fahrertyp (beispielsweise 0 für einen "ökonomischen" Fahrer und 128 für einen "sportlichen" Fahrer).

## Patentansprüche

1. Verfahren zur Regelung stufenlos verstellbarer Getriebe von Kraftfahrzeugen, bei dem
- mit einem ersten Regelkreis (1) als Drehzahlregler die Getriebeeingangsdrehzahl (n_{IN}) geregelt wird, wobei einem Summationsglied (11) am Eingang (RE1) eines Regelkreisglieds (12) die Regelabweichung der Getriebeeingangsdrehzahl (n_{IN}) als Differenz aus Sollwert (n_{IN,SOLL}) und Istwert (n_{IN,IST}) der Getriebeeingangsdrehzahl (n_{IN}) zugeführt wird,
- mit einem dem ersten Regelkreis (1) unterlagerten zweiten Regelkreis (2) als Drehzahländerungsregler die zeitliche Ableitung (d/dt) der Getriebeeingangsdrehzahl (n_{IN}) geregelt wird, wobei einem mit dem Ausgang (RA1) des Regelkreisglieds (12) des ersten Regelkreises (1) verbundenen Summationsglied (21) am Reglereingang (RE2) des unterlagerten zweiten Regelkreises (2) der Istwert der zeitlichen Ableitung (d/dt(n_{IN})) der Getriebeeingangsdrehzahl (n_{IN}) zugeführt wird,
- zur Vorgabe eines variablen Regelverhaltens in Abhängigkeit der Betriebsbedingungen des Kraftfahrzeugs unterschiedliche Filterfunktionen (FF) als vorgegebener Zusammenhang zwischen der Eingangsgröße Regelabweichung (Δ1) der Getriebeeingangsdrehzahl (n_{IN}) und der Ausgangsgröße Sollwert der zeitlichen Ableitung (d/dt(n_{IN})) der Getriebeeingangsdrehzahl (n_{IN}) definiert werden,
- abhängig von den aktuellen Betriebsbedingungen des Kraftfahrzeugs von dem als Filterglied ausgebildeten Regelkreisglied (12) des ersten Regelkreises (1) anhand der definierten Filterfunktionen (FF) eine Filterfunktion als aktuelle Filterfunktion (FFa) generiert wird,
- abhängig von der Regelabweichung (Δ1) der Getriebeeingangsdrehzahl (n_{IN}) die Funktionswerte der aktuellen Filterfunktion (FFa) vom Filterglied als Filterwerte (FW) dem Summationsglied (21) am Reglereingang (RE2) des zweiten Regelkreises (2) als Führungsgröße (FG2) zugeführt werden,
**dadurch gekennzeichnet,**
- **daß** die aus dem Produkt der Getriebeausgangsdrehzahl (n_{OUT}) und des Getriebeübersetzungsverhältnisses (ÜV) berechnete Getriebeeingangsdrehzahl (n_{IN}) geregelt wird.

2. Verfahren nach Anspruch 1, **dadurch gekennzeichnet, daß** in Abhängigkeit der Betriebsbedingungen des Kraftfahrzeugs die Filterfunktionen (FF) hinsichtlich steigung, Maximalwerte, Minimalwerte und Bereichsgrenzen variiert werden.

3. Verfahren nach Anspruch 1 oder 2, **dadurch gekennzeichnet, daß** die Filterfunktionen (FF) in Abhängigkeit der Fahrsituation des Kraftfahrzeugs und/oder der Geschwindigkeit des Kraftfahrzeugs und/oder des Getriebeübersetzungsverhältnisses (ÜV) und/oder der maximalen Änderungsgeschwindigkelt des Getriebeübersetzungsverhältnisses (ÜV) und/oder des Fahrertyps und/oder der Größe der Regelabweichung als Differenz zwischen Sollwert und Istwert der Getriebeeingangsdrehzahl (n_{IN}) definiert bzw. variiert werden.

4. Verfahren nach einem der Ansprüche 1 bis 3, **dadurch gekennzeichnet, daß** die Funktionswerte der aktuellen Filterfunktion (FFa) als Funktionswerte einer definierten Filterfunktion (FF) gewählt werden.

5. Verfahren nach einem der Ansprüche 1 bis 3, dadurch gekennzelchnet, daß die Funktionswerte der aktuellen Filterfunktion (FFa) unter Verwendung mindestens zweier definierter Filterfunktionen (FF) bestimmt werden.

6. verfahren nach Anspruch 5, **dadurch gekennzeichnet, daß** die Funktionswerte der aktuellen Filterfunktion (FFa) durch Interpolation zwischen den Funktionswerten der definierten Filterfunktionen (FF) bestimmt werden.

7. verfahren nach einem der Ansprüche 1 bis 3, **dadurch gekennzeichnet, daß** die Funktionswerte der aktuellen Filterfunktion (FFa) durch Interpolation aus einem Kennfeld ermittelt werden.

## Claims

1. A method of controlling continuously variable transmission systems in motor vehicles wherein
- the input rotational speed of the transmission (n_{IN}) is regulated by means of a rotational speed regulator in the form of a first control loop (1), wherein the deviation of the input rotational speed of the transmission (n_{IN}), in the form of the difference between the preferred value (n_{IN,SOLL}) and the actual value (n_{IN.IST}) of the input rotational speed of the transmission (n_{IN}), is supplied to a summing element (11) at the input (RE1) of a control loop element (12),
- the time derivative (d/dt) of the input rotational speed of the transmission (n_{IN}) is regulated by means of a rate-of-change of speed regulator in the form of a second control loop (2) subordinate to the first control loop (1), wherein the actual value of the time derivative (d/dt(_{IN})) of the input rotational speed of the transmission (n_{IN}) is supplied to a summing element (21) at the regulating input (RE2) of the subordinate second control loop (2) which is connected to the output (RA1) of the control loop element (12) of the first control loop (1),
- for the purposes of producing a variable regulating behaviour in dependence on the operating conditions of the motor vehicle, differing filter functions (FF) are defined in the form of a predefined relationship between the input value, the deviation (Δ1) of the input rotational speed of the transmission (n_{IN}) and the output value, the preferred value for the time derivative (d/dt(n_{IN})) of the input rotational speed of the transmission (n_{IN}),
- a filter function in the form of the currently effective filter function (FFa) is generated in dependence on the actual operating conditions of the vehicle by the control loop element (12) of the first control loop (1), which is in the form of a filter element, with the aid of the defined filter functions (FF),
- in dependence on the deviation (Δ1) of the input rotational speed of the transmission (n_{IN}), the functional values of the currently effective filter function (FFa) are supplied, in the form of filter values (FW), by the filter element to the summing element (21) at the regulating input (RE2) of the second control loop (2) as command variables (FG2) therefor,
**characterised in that**
- the input rotational speed of the transmission (n_{IN}), as calculated from the product of the output rotational speed of the transmission (n_{OUT}) and the transmission ratio (ÜV), is regulated.

2. A method in accordance with Claim 1, **characterised in that**, the filter functions (FF) are varied in regard to slope, maximum values, minimum values and range boundaries in dependence on the actual operating conditions of the motor vehicle.

3. A method in accordance with Claim 1 or 2, **characterised in that** the filter functions (FF) are defined or varied in dependence on the driving situation of the motor vehicle, and/or the speed of the motor vehicle, and/or the transmission ratio (ÜV), and/or the maximum speed for the rate-of-change of the transmission ratio (ÜV), and/or the type of driver, and/or the magnitude of the deviation in the form of the difference between the preferred value and the actual value of the input rotational speed of the transmission (n_{IN}).

4. A method in accordance with any of Claims 1 to 3, **characterised in that** the functional values of the currently effective filter function (FFa) are selected in the form of the functional values of a defined filter function (FF).

5. A method in accordance with any of Claims 1 to 3, **characterised in that** the functional values of the currently effective filter function (FFa) are determined by using at least two defined filter functions (FF).

6. A method in accordance with Claim 5, **characterised in that** the functional values of the currently effective filter function (FFa) are determined by a process of interpolation between the functional values of the defined filter functions (FF).

7. A method in accordance with any of Claims 1 to 3, **characterised in that** the functional values of the currently effective filter function (FFa) are determined by a process of interpolation from a characteristic field.

## Revendications

1. Procédé de régulation d'une boîte continûment variable de véhicules, selon lequel
- à l'aide d'un premier circuit de régulation (1), en tant que régulateur de vitesse de rotation, est régulée la vitesse de rotation d'entrée de la boîte (n_{IN}), à un élément de sommation (11) à l'entrée (RE1) d'un élément de circuit de régulation (12) étant amené l'écart de régulation de la vitesse de rotation d'entrée de la boîte (n_{IN}) en tant que différence entre la valeur de consigne (n_{IN,CONSIGNE}) et la valeur réelle (n_{IN,REELLE}) de la vitesse de rotation d'entrée de la boîte (n_{IN}),
- à l'aide d'un second circuit de régulation (2) asservi au premier circuit de régulation (1) en tant que régulateur de variation de vitesse de rotation, est régulée la dérivée par rapport au temps (d/dt) de la vitesse de rotation d'entrée de la boîte (n_{IN}), à un élément de sommation (21) relié à la sortie (RA1) de l'élément de circuit de régulation (12) du premier circuit de régulation (1) à l'entrée de régulation (RE2) du second circuit de régulation asservi (2), est amenée la valeur réelle de la dérivée par rapport au temps (d/dt(n_{IN})) de la vitesse de rotation d'entrée de la boîte (n_{IN}),
- en vue de la prédétermination d'un comportement de régulation variable en fonction des conditions de fonctionnement du véhicule sont définies différentes fonctions de filtre (FF) en tant que rapport prédéterminé entre la valeur d'entrée écart de régulation (Δ1) de la vitesse de rotation d'entrée de la boîte (n_{IN}) et la grandeur de sortie valeur de consigne de la dérivée par rapport au temps (d/dt(n_{IN})) de la vitesse de rotation d'entrée de la boîte (n_{IN}),
- en fonction des conditions réelles de fonctionnement du véhicule à partir de l'élément de circuit de régulation (12) réalisé en tant qu'élément de filtre du premier circuit de régulation (1) est générée à l'aide des fonctions de filtre définies (FF) une fonction de filtre en tant que fonction de filtre réelle (FFa),
- en fonction de l'écart de régulation (Δ1) de la vitesse de rotation d'entrée de la boîte (n_{IN}) sont amenées les valeurs de la fonction de filtre réelle (FFa) depuis l'élément de filtre en tant que valeurs de filtre (FW) à l'élément de sommation (21) à l'entrée de régulation (RE2) du second circuit de régulation (2) en tant que grandeur de référence (FG2),
**caractérisé**
- **en ce que** la vitesse de rotation d'entrée de boîte (n_{IN}) calculée à partir du produit de la vitesse de rotation de sortie de boîte (n_{OUT}) et du rapport de transformation de boîte (ÜV) est régulée.

2. Procédé selon la revendication 1, **caractérisé en ce qu'**en fonction des conditions de fonctionnement du véhicule, les fonctions de filtre (FF) sont modifiées en ce qui concerne l'accroissement, les valeurs maximales, les valeurs minimales et les limites de plage.

3. Procédé selon la revendication 1 ou 2, **caractérisé en ce que** les fonctions de filtre (FF) sont définies ou modifiées en fonction de la situation de conduite du véhicule et/ou de la vitesse du véhicule et/ou du rapport de transformation de la boîte (ÜV) et/ou de la vitesse de variation maximale du rapport de transformation de boîte (ÜV) et/ou du type de conducteur et/ou de la grandeur de l'écart de régulation en tant que différence entre valeur de consigne et valeur réelle de la vitesse de rotation d'entrée de la boîte (n_{IN}).

4. Procédé selon l'une des revendications 1 à 3, **caractérisé en ce que** les valeurs de fonction de la fonction de filtre réelle (FFa) sont choisies en tant que valeurs de fonction d'une fonction de filtre définie (FF).

5. Procédé selon l'une des revendications 1 à 3, **caractérisé en ce que** les valeurs de fonction de la fonction de filtre réelle (FFa) sont déterminées par utilisation d'au moins deux fonctions de filtre définies (FF).

6. Procédé selon la revendication 5, **caractérisé en ce que** les valeurs de fonction de la fonction de filtre réelle (FFa) sont déterminées par interpolation entre les valeurs de fonction des fonctions de filtre définies (FF).

7. Procédé selon une des revendications 1 à 3, **caractérisé en ce que** les valeurs de fonction de la fonction de filtre réelle (FFa) sont obtenues par interpolation à partir d'un domaine caractéristique.
